## Europäisches Patentamt

## European Patent Office

## Office européen des brevets

(19)

(11) Numéro de publication: **0 104 965**
**B1**

(12) **FASCICULE DE BREVET EUROPÉEN**

(45) Date de publication du fascicule du brevet:
**10.06.87**

(51) Int. Cl.⁴: **H 01 C 10/02**, H 02 P 1/36

(21) Numéro de dépôt: **83401650.3**

(22) Date de dépôt: **11.08.83**

---

(54) **Rhéostat liquide à niveau variable pour démarrage d'un moteur électrique.**

---

(30) Priorité: **23.08.82 FR 8214474**

(43) Date de publication de la demande:
**04.04.84 Bulletin 84/14**

(45) Mention de la délivrance du brevet:
**10.06.87 Bulletin 87/24**

(84) Etats contractants désignés:
**AT BE CH DE FR GB IT LI LU NL SE**

(56) Documents cité:
**BE-A-343 825**
**FR-A-697 871**
**FR-A-2 395 578**

(73) Titulaire: **Bensadoun, Michel, Le Montin, F-87270 Couzeix (FR)**

(72) Inventeur: **Bensadoun, Michel, Le Montin, F-87270 Couzeix (FR)**

(74) Mandataire: **CABINET BONNET- THIRION, 95 Boulevard Beaumarchais, F-75003 Paris (FR)**

---

LIBER, STOCKHOLM 1987

EP 0 104 965 B1

## Description

La présente invention concerne d'une manière générale les rhéostats liquides à niveau variable du type de ceux couramment mis en oeuvre par exemple pour le démarrage de moteurs électriques dont la mise en route nécessite l'insertion, sur le circuit d'excitation correspondant, d'une résistance, qui, initialement élevée, doit aller progressivement en décroissant au fur et à mesure du démarrage.

Il peut s'agir aussi bien du démarrage de moteurs à démarrage statorique, que du démarrage de moteurs à démarrage rotorique, et notamment de moteur à rotor en court-circuit.

D'une manière générale, les rhéostats liquides à niveau variable mis en oeuvre à cet effet comportent, tel que décrit par exemple dans le brevet français déposé le 27 Juin 1977 sous le N° 7 718 915 et publié sous le N° 2.395.578, un réservoir, qui contient de l'électrolyte, une cuve de démarrage, qui est disposée au-dessus dudit réservoir et dans la partie supérieure de laquelle sont disposées des électrodes, des bornes de connexion propres à une liaison desdites électrodes au circuit d'excitation du moteur à mettre en route, et une canalisation d'alimentation établie entre ledit réservoir et ladite cuve de démarrage pour introduction d'électrolyte dans celle-ci.

Initialement, seule est présente dans la cuve de démarrage une quantité minime d'électrolyte, et donc seule est immergée la portion inférieure des électrodes.

Il en résulte que celles-ci intrduisent alors une résistance élevée dans le circuit d'excitation du moteur à mettre en route.

Au démarrage, il est assuré, par des moyens de commande appropriés, et par exemple par une pompe, un envahissement progressif de la cuve de démarrage par de l'électrolyte, en sorte qu'un tronçon croissant des électrodes se trouve progressivement immergé, et ainsi court-circuité.

Seule la partie émergeante de ces électrodes continuant à insérer une résistance dans le circuit d'excitation du moteur à mettre en route, cette résistance va ainsi progreseivement en décroissant, comme recherché.

Au terme du démarrage ainsi assuré, qui implique une stabilité de la vitesse du moteur concerné, et dont une stabilité de l'intensité circulant dans son circuit d'excitation, les électrodes sont mises hors circuit, soit par un contact piloté par un flotteur, soit par un contact temporisé à cet effet.

En pratique, à la partie haute de la cuve de démarrage, il est usuellement prévu un évent, qui fait communiquer la partie supérieure de ladite cuve de démarrage avec la partie supérieure du réservoir sous-jacent, pour éviter une compression de l'atmosphère dans la cuve de démarrage au fur et à mesure de l'envahissement de celle-ci par de l'électrolyte, et qui, formant seuil de déversement, peut, occasionnellement au moins, faire office d'ouverture de trop-plein pour cet électrolyte.

Bien que de tels rhéostats liquides à niveau variable aient donné et puissent encore donner satisfaction, leur mise en oeuvre peut, au moins, dans certaines applications, soulever des difficultés.

En effet, ils ne permettent pas, à ce jour, de contrôler commodément la montée en vitesse des moteurs en cours de demarrage, ou, autrememt dit, le processus d'accélération de ceux-ci, ni, ensuite, leur mise en vitesse nominale.

S'agissant des moteurs à démarrage statorique, la raison en est que, suivant des exigences au moins apparemment contradictoires, la montée en vitesse doit se faire très rapidement, ce qui implique la mise en oeuvre de moyens de commande aptes à assurer un débit important de l'électrolyte du réservoir vers la cuve de démarrage, et que, conjointement, après la montée en vitesse précédente, une intensité constante doit être conservée durant la fin du démarrage, ce qui implique une stabilisation du niveau atteint par l'électrolyte dans la cuve de démarrage.

S'agissant de moteurs à démarrage rotorique, la raison en est également que si, dans une première phase, la montée en vitesse du moteur en cours de démarrage doit elle aussi se faire rapidement, il est souhaitable que, dans une deuxième phase, pour permettre au moteur de finir sa mise en vitesse, la montée de l'électrolyte dans la cuve de démarrage soit lente.

La présente invention a d'une manière générale pour objet une disposition permettant de satisfaire de manière particulièrement simple et efficace à ces diverses exigences, et permettant donc avec une grande sûreté le contrôle de la montée en vitesse d'un moteur à sa mise en route.

De manière plus précise, la présente invention a pour objet un rhéostat liquide à niveau variable pour le démarrage de moteur électrique, du genre comportant un réservoir, qui contient de l'électrolyte, une cuve de démarrage qui est disposée au-dessus dudit réservoir, et dans la partie supérieure de laquelle sont disposées des électrodes, des bornes de connexion propres à une liaison desdites électrodes au circuit d'excitation du moteur à mettre en route, une canalisation d'alimentation établie entre ledit réservoir et ladite cuve de démarrage pour introduction d'électrolyte dans celle-ci, et un seuil de déversement qui, disposé dans ladite cuve de démarrage, est propre à limiter au moins temporairement le niveau d'électrolyte dans celle-ci caractérisé en ce que le seuil de déversement est monté réglable en hauteur dans la cuve de démarrage, sous le contrôle d'une commande à la disposition de l'usager, le seuil de déversement est formé par au moins une ouverture, dite ci-après ouverture de déversement, pratiquée latéralement dans au moins un tube fermé transversalement vers le haut, au-dessus de ladite ouverture de déversement dans la cuve de démarrage, et, directement ou indirectement, ledit tube, dit ci-après tube de commande, plonge dans l'électrolyte contenu dans le réservoir, en sorte qu'il est capable de siphonnement.

Un tube ainsi capable de siphonnement permet avantageusement, pour l'envahissement recherché en électrolyte de la cuve de démarrage, la mise en oeuvre de moyens de commande susceptibles, comme souhaité, d'un débit en électrolyte important.

En effet, dès que, son seuil de déversement étant atteint, il est totalement envahi en électrolyte, il fonctionne en siphon et, son volume intérieur étant alors en dépression par rapport à la pression régnant dans le réservoir, il assure, lui aussi, comme recherché, un débit de retour important de la cuve de démarrage vers ce réservoir, supérieur, en tout cas, à celui d'une simple ouverture de trop-plein de section de passage comparable.

En pratique, au-dessus du seuil de déversement que comporte ce tube, il est prévu, latéralement, sur celui-ci, au moins une ouverture de moindre section de passage, dite ci-après ouverture de casse vide.

Dans un premier temps, sous l'effet des moyens de commande associés, le niveau d'électrolyte dans la cuve de démarrage dépasse aussi bien la ou les ouverture(s) de déversement que la ou les ouverture(a) de casse vide.

Mais, lorsque, comme mentionné ci-dessus, le siphon que forme alors le tube concerné est amorcé, le niveau d'électrolyte dans la cuve de démarrage s'abaisse, jusqu'à ce que; la ou les ouverture(s) de casse vide redevennat dégagée(s), un tel siphon se désamorce.

Il y a dès lors une reprise de la montée du niveau d'électrolyte dans la cuve de démarrage, et, le processus se répétant cycliquement, une stabilisation très rapide de ce niveau à un niveau moyen, choisi pour être le niveau recherché.

Le rhéostat liquide suivant l'invention convient donc parfaitement au démarrage d'un moteur électrique à démarrage statorique.

Mais il convient également parfaitement au démarrage d'un moteur électrique à démarrage rotorique.

A cet effet, le tube mis en oeuvre traverse le fond de la cuve de démarrage à la faveur d'un fourreau, qui est solidaire dudit fond, et dans lequel il est monté coulissant axialement à étanchéité sous le contrôle de la commande à la disposition de l'usager, et, sensiblement à mi-hauteur, il présente latéralement au moins une ouverture de déversement, qui est normalement masquée par ledit fourreau et qui se trouve démasquée lorsqu'il est en position haute, en débouchant alors dans la cuve de démarrage.

Pour un moteur à démarrage rotorique, le tube suivant l'invention peut par exemple être systématiquement mis en position haute, en sorte que la ou les ouverture(s) de déversement qu'il présente à mi-hauteur se trouve(nt) alors totalement démasquées, à la base de la cuve de démarrage, et que le débit de retour en électrolyte qu'elle(s) permet(tent) de cette cuve de démarrage vers le réservoir est fonction de la pression hydrostatique de la colonne de liquide qui la ou les surmonte.

Celle-ci allant croissant avec le niveau d'électrolyte dans la cuve de démarrage la montée de celui-ci se trouve de ce fait comme recherche, progressivement ralentie, à raison du débit de retour croissant qui en résulte pour l'électrolyte.

En variante, le tube suivant l'invention peut, si désiré, être mis dans une position pour laquelle la ou les ouverture(s) de déversement qu'il présente à mi-hauteur ne se trouve(nt)que plus ou moins démasquées, voire encore obturées, et n'assure(nt) donc qu'un debit de retour plus ou moins important, voire nul.

Il est ainsi possible suivant l'invention d'assurer mécaniquement, de manière très simple, avec une grande souplesse d'adaptation le type de démarrage souhaité pour le moteur concerné, avec une rampe d'accélération linéaire ou pas.

Les caractéristiques et avantages de l'invention ressortiront d'ailleurs de la description qui va suivre, à titre d'exemple, en référence aux dessins schématiques annexés sur lesquels:

la figure 1 est une vue en élévation-coupe d'un rhéostat liquide à niveau variable suivant l'invention;

la figure 2 est à échelle supérieure, et suivant la ligne II-II de la figure 1, une vue en coupe axiale du tube qu'il comporte suivant l'invention, représenté isolément;

les figures 3A, 3B sont des vues qui, reprenant pour partie celle de la figre 1, illustrent la mise en oeuvre de ce tube pour le démarrage d'un moteur électrique à démarrage statorique;

la figure 4 est une vue analogue à celle des figures 3A, pour le démarrage d'un moteur électrique à démarrage rotorique;

la figure 5 est une vue partielle analogue à celle de la figure 1, et concerne une variante de réalisation;

la figure 6 reprend, à échelle superieure, le détail de la figure 5 repéré par un encart sur celle-ci;

les figures 7, 8 sont des vues en coupe transversale du tube correspondant suivant respectivement les lignes VII-VII et VIII-VIII de la figure 6;

la figure 9 est une vue reprenant pour partie celle de la figure 1 et se rapporte à une autre variante de réalisation.

Conformément aux formes de réalisation représentées sur les figures, et tel que décrit dans le brevet français N° 2.395.578 mentionné ci-dessus, le rhéostat liquide à niveau variable suivant l'invention comporte, d'une manière générale, un réservoir 10, qui contient de l'électrolyte 11, une cuve de démarrage 12, qui est disposée au-dessus dudit réservoir 10, et dans la partie supérieure de laquelle sont disposées des électrodes 13, convenablement isolées les unes des autres, et au nombre de trois dans les formes de réalisation repéesentées, et une canalisation d'alimentation 14, qui est établie entre le réservoir 10 et la base de la cuve de démarrage 12, pour introduction d'electrolyte 11 dans cette cuve de démarrage 12, sous le contrôle d'une part, d'une pompe immergée 15 commandée par un moteur 16, et, d'autre part, d'une vanne 18 soumise à un bouton commande 19 à la disposition de l'usager.

De manière usuelle, une filerie 20 relie les électrodes 13 à des bornes de connexion 22 susceptibles d'en assurer la liaison au circuit d'excitation du moteur électrique à mettre en route.

De manière usuelle également, il est en outre prévu un bloc contacteur 23, propre à mettre hors circuit les électrodes 13.

Dans la forme de réalisation représentée, les contacts 24 de ce bloc contacteur 23 sont à cet effet pilotés par un relais temporisé 25.

En pratique, les électrodes 13 s'étendent verticalement en porte-à-faux à compter d'un couvercle 27 fermant la cuve de démarrage 12, et la canalisation d'alimentation 14 fait saillie sur le fond 28 de celle-ci de manière à ce qu'il subsiste toujours, dans cette cuve de démarrage 12, un niveau d'électrolyte suffisant pour que la portion inférieure desdites électrodes 13 y soit en permanence immergée.

Ces dispositions sont bien connues par elles-mêmes, et, ne faisant pas partie de la présente invention, elles ne seront pas décrites plus en détail ici.

De manière également connue en soi, il est en outre prévu, à la partie supérieure de la cuve de démarrage 12, un seuil de déversement 30, propre à limiter au moins temporairement, le niveau d'électrolyte dans celle-ci.

Suivant l'invention, ledit seuil de déversement 30 est monté réglable en hauteur dans la cuve de démarrage 12, sous le contrôle d'une commande 31 à la disposition de l'usager.

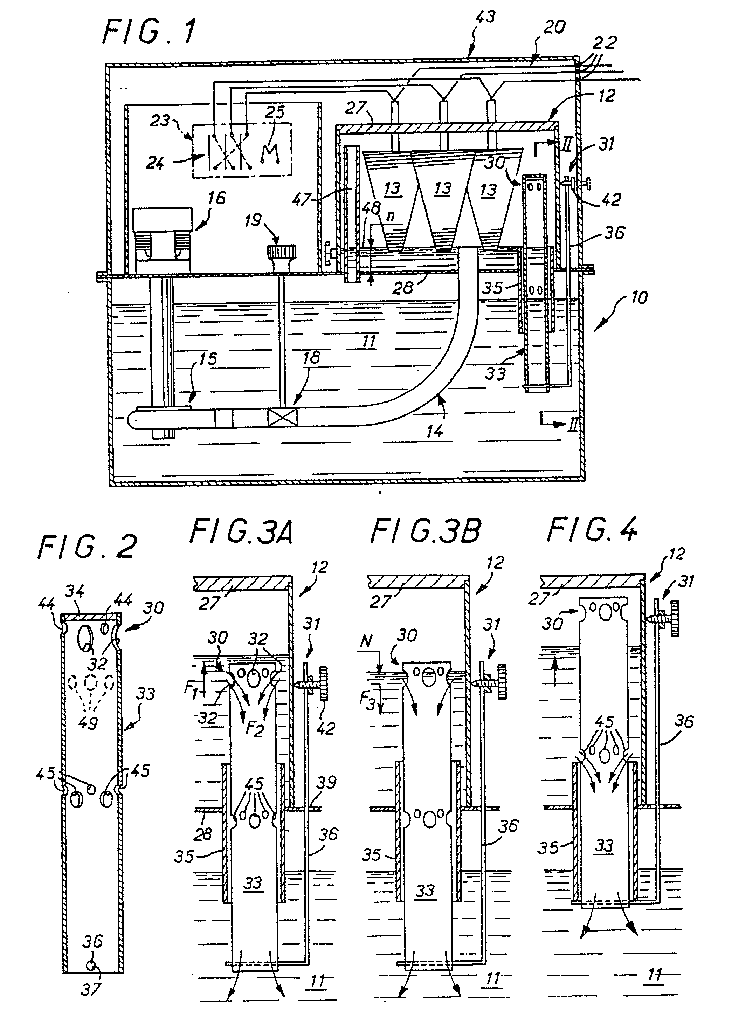

Dans la forme de réalisation représentée sur les figures 1 à 4, ce seuil de déversement 30 est formé par au moins une ouverture 32, dite ci-après ouverture de déversement, pratiquée latéralement dans un tube 33 fermé transversalement, vers le haut, par une paroi 34, au-dessus de ladite ouverture de déversement 32, et, conjointement, ledit tube 33, dit ci-après tube de commande, plonge, directement ou indirectement, dans l'électrolyte 11 contenu dans le réservoir 10, en sorte que tel qu'il est décrit plus en détail ci-après, il est capable de siphonnement.

En pratique, dans la forme de réalisation représentée sur les figures 1 à 4 le tube de commande 33 traverse le fond 28 de la cuve de démarrage 12 à la faveur d'un fourreau 35, qui est solidaire dudit fond 28, et dans lequel il est monté coulissant axialement, à étancheité, sous le contrôle de la commande 31 à la disposition de l'usager, et c'est directement que, à sa base, il plonge droit dans l'électrolyte 11 contenu dans le réservoir 10.

Tel que représenté, la commande 31 à la disposition de l'usager est simplement formée d'une tige coudée 36 dont la partie horizontale traverse diamétralement le tube de commande 33, à la faveur de deux trous 37 prévus à cet effet à la base de celui-ci, et dont la partie verticale, après traversée d'un plancher intermediaire 39 prolongeant le fond 28 de la cuve de démarrage 12, pour fermer le réservoir 10, porte un bouton de commande 42 propre à en assurer un blocage en position.

Il peut s'agir par exemple d'une vis pointeau coopérant à cet effet avec la paroi latérale de la cuve de démarrage 12, tel que schématisé à la figure 1.

En variante, un tel bouton de commande 42 peut être simplement monté réglable en position dans une boutonnière ménagée à cet effet dans un flasque solidaire de la paroi latérale de la cuve de démarrage 12 ou de celle du carter 43 qui, doublant en hauteur le réservoir 10, protège conjointement la cuve de démarrage 12 et les divers constituants associés à celle-ci.

Tel que représenté en trait plein, le bouton de commande 42 est disposé à l'intérieur du carter 43.

En variante, et tel que schématisé en traits interrompus à la figure 1, il peut être disposé à l'extérieur de celui-ci.

Quoi qu'il en soit, il permet un réglage en hauteur du tube de commande 33 dans la cuve de démarrage 12.

En pratique, dans la forme de réalisation représentée sur les figures 1 à 4, le tube de commande 33 suivant l'invention comporte, pour former le seuil de déversement 30, une pluralité d'ouvertures de déversement 32, de relativement grande section de passage, qui, réparties circulairement, sont par exemple toutes établies à un même niveau, tel que représenté.

Il s'agit dans la forme de réalisation représentée, d'ouvertures de contour globalement circulaire.

Suivant l'invention au-dessus du seuil de déversement que forment ces ouvertures de déversement 32, le tube de commande 33 présente au moins une ouverture de moindre section de passage 44, dite ci-après ouverture de casse-vide.

Dans la forme de réalisation représentée, une pluralité d'ouvertures de casse-vide 44 sont prévues, en nombre égal à celui des ouvertures de déversement 32. et en alternance avec celles-ci.

Elles n'ont pas été représentées sur la figure 1.

Il s'agit également, dans cette forme de réalisation, d'ouvertures de contour circulaire.

Par ailleurs, le tube de commande 33 suivant l'invention présente latéralement, à mi-hauteur au moins une ouverture de déversement 45, qui est normalement masquée par le fourreau 35 qu'il traverse, et qui se trouve démasquée lorsque, tel que représenté à la figure 4, ce tube de commande 33 est en position haute, en débouchant alors dans la cuve de démarrage 12.

En pratique, dans la forme de réalisation représentée sur les figures 1 à 4 plusieurs ouvertures de déversement 45 sont prévues, qui sont de préférence réparties circulairement, et qui sont par exemple établies à deux niveaux différents, tel que représenté les unes, de moindre section de passage, à un premier niveau, et les autres, de section de passage supérieur, à un deuxième niveau.

Enfin, dans les formes de réalisation représentées, il est en outre prévu un évent 47, qui fait communiquer la partie supérieure de la cuve de démarrage 12 avec la partie supérieure du réservoir 10 sous-jacent, pour équilibrage des atmosphères correspondantes.

Au niveau n précisé ci-dessus, le tube constituant en pratique cet évent 47 présente de préférence, suivant l'invention, une ouverture 48.

On supposera tout d'abord, en reference aux figures 3A et 3B, qu'il s'agit d'assurer le démarrage d'un moteur électrique à démarrage statorique.

Sous le contrôle de la commande 31, le tube de commande 33 suivant l'invention est alors disposé à un niveau déterminé, qui établi de manière empirique au cours d'essais préliminaires, est intermédiaire entre son niveau inférieur et son niveau supérieur.

Pour le niveau ainsi choisi, les ouvertures de déversement 45 qu'il présente à mi-hauteur sont en toute certitude masquées par le fourreau 35 qu'il traverse, la longueur de celui-ci étant établie de manière à ce que de telles ouvertures de déversement 45 ne soient effectivement démasquées que lorsque, comme mentionn51 ci-dessus, et tel qu'illustré à la figure 4, le tube de commande 33 est en position haute.

La pompe 15 étant mise en route, avec un étranglement convenable de son débit sous le contrôle de la vanne 18, il y a progressivement un transfert d'électrolyte 11 du réservoir 10 vers la cuve de démarrage 12, en sorte que le niveau d'électrolyte 11 dans celle-ci monte, tel que schématisé par la flèche F1 à la figure 3A.

Lorsque ce niveau atteint les ouvertures de déversement 32, il s'établit à travers celles-ci, et tel que schématisé par les flèches F2 de la figure 3A, un débit de retour de l'électrolyte 11 vers le réservoir 10, par le tube de commande 33.

Mais ce débit de retour est inférieur à celui de la pompe, en sorte que le niveau d'électrolyte 11 dans la cuve de démarrage 12 continue à monter.

Il en est ainsi jusqu'à ce que, totalement envahi d'électrolyte, le tube de commande 33 suivant l'invention se mette à fonctionner en siphon, du fait qu'il est fermé vers le haut par la paroi transversale 34 qu'il comporte.

Son volume intérieur étant alors en dépression par rapport à la pression dans le réservoir 10, le débit de retour de l'électrolyte 11 vers celui-ci s'accélère, tout se passant comme si un courant de succion s'établissait alors de la cuve de démarrage 12 vers ledit réservoir 10.

Il en résulte, tout d'abord, un ralentissement de la montée de l'électrolyte 11 dans la cuve de démarrage 12, puis une inversion du sens d'évolution de ce niveau, qui, tel que schématisé par la flíche F3 sur la figure 3B, se met à baisser.

Dès que l'électrolyte 11 démasque les ouvertures de casse-vide 44, il y a un désamorçage immédiat du siphon que formait jusqu'alors le tube de commande 33.

Ne bénéficiant plus dans ces conditions de la dépression précédente, le debit de retour de l'électrolyte 11 vers le réservoir 10 se ralentit brusquement, en sorte que le niveau d'électrolyte 11 dans la cuve de démarrage 12 recommence à monter.

Un processus analogue à celui décrit ci-dessus se répète alors cycliquement, et il en résulte, globalement, la stabilisation de l'electrolyte 11 dans la cuve de démarrage 12 à un niveau N, qui est lié à la position du tube de commande 33 dans cette cuve de démarrage 12, et qui par les essais préliminaires mentionnés ci-dessus, correspond aux conditions de démarrage souhaitées pour le moteur concerné.

Au bout d'un temps déterminé par le relais temporisé 25, les électrodes 13 sont mises hors circuit par les contacts 24, et, conjointement, la pompe 16 est arrêtée.

Il y a alors une vidange rapide de la cuve de démarrage 12, tant par la pompe 15, qui fonctionne alors en turbine, que par l'ouverture 48 de l'évent 47, qui, ne format précédemment qu'une fuite négligeable eu égard au débit de ladite pompe, accélère ensuite avantageusement la vidange de la cuve de démarrage 12.

Dans le cas du démarrage d'un moteur électrique à démarrage rotorique, le tube de commande 33 suivant l'invention est mis en position haute, tel qu'illustré à la figure 4.

Ce sont alors ses ouvertures de déversement 45 qui interviennent.

Leur débit étant proportionnel à la hauteur de la colonne de liquide qui les surmonte, l'envahissement en électrolyte de la cuve de démarrage 12 se trouve progressivement ralenti.

En pratique, et tel qu'indiqué ci-dessus, par un ajustement approprié de la position du tube de commande 33, les ouvertures de déversement 45 de celui-ci peuvent n'être que plus ou moins démasquées, voire demeurer masquées, suivant le type de démarrage à obtenir.

Suivant une variante de réalisation qui n'est que schématisé en traits interrompus à la figure 2 il est prévu, en dessous du seuil de déversement 30 que constituent les ouvertures 32, entre celui-ci et les ouvertures de déversement 45, des trous 49, dits ici trous de gavage, de moindre section que lesdites ouvertures 32, 45.

Compte tenu de la section de passage qu'ils offrent à l'électrolyte, ces trous de gavage 49, au démarrage, n'interviennent pratiquement pas sur le débit en électrolyte à assurer par la pompe 15 pour la montée en électrolyte dans la cuve de démarrage 12.

Mais, au cours de cette montée de l'électrolyte, ils assurent avantageusement un complexage progressif du tube de commande 33 avant que soit atteint le seuil de déversement 30.

Par suite, ils favorisent l'obtention d'une stabilisation immédiate, au bon niveau, de l'électrolyte dans la cuve de démarrage 12, par amorçage instantané du processus de siphonnement, dès que le seuil de déversement 30 est atteint.

L'éventuelle pointe d'intensité due à un dépassement de ce seuil de déversement 30 se trouve ainsi avantageusement évitée.

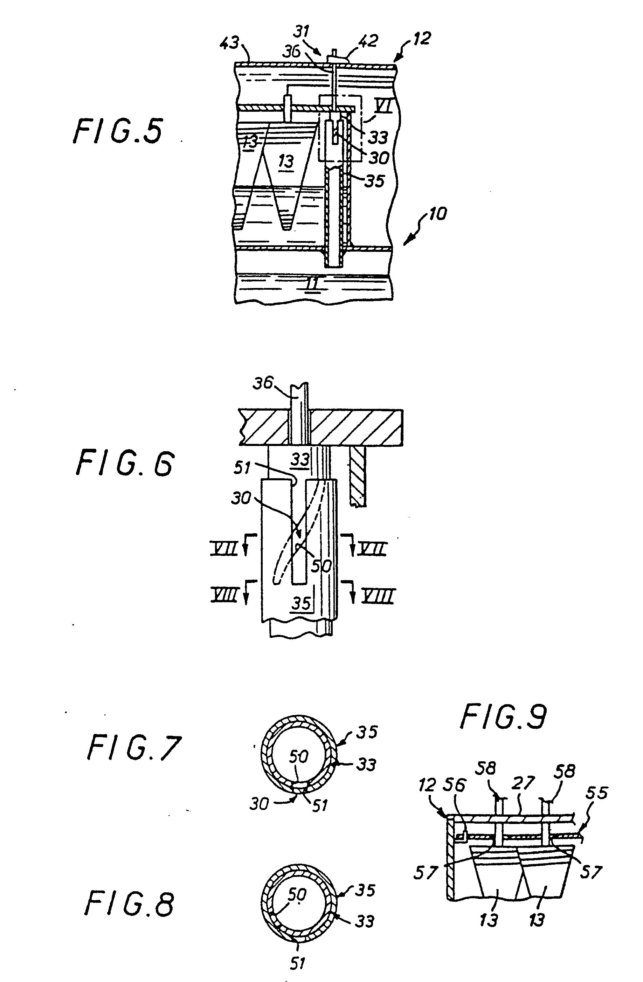

Dans la variante de réalisation illustrée par les figures 5 à 8, le seuil de déversement 30 est formé par la conjonction de deux tubes coaxiaux 33, 35 emboîtés l'un dans l'autre, qui sont chacun affectés d'une fente, respectivement 50, 51, et dont un au moins est monté rotatif autour de l'axe de l'ensemble sous le contrôle de la commande 31 à la disposition de l'usager la fente 50, 51 de l'un au moins desdits tubes 33, 35 étant globalement oblique vis-à-vis du dit axe.

En pratique, dans la forme de réalisation représentée, c'est le tube interne 33, dit ci-après tube de commande, comme précédemment, qui est calé sur la commande 31 à la disposition de l'usager, et celle-ci est constituée par une simple tige 36, qui, traversant la partie supérieure du carter 43, porte, au-delà de celle-ci, un bouton de commande 42.

En outre, dans la forme de realisation représentée, la fente 50 que présente le tube de commande 33 est oblique, cette fente 50 s'étendant en hélice sur une portion du tube de commande 33, suivant une ouverture angulaire égale par exemple à 180°.

En pratique, en partie haute, le tube de commande 33 est, comme précédemment, fermé par une paroi transversale, et c'est à celle-ci qu'est solidarisée la tige 36 de la commande 31 associée.

Conjointement, dans la forme de réalisation représentée, le tube externe 35 est, comme précédemment, solidaire du fond 28 de la cuve de démarrage 12, et, également comme précédemment, il constitue, pour le tube de commande 33, un fourreau dans lequel celui-ci est monté rotatif à étanchéité.

Dans la forme de réalisation représentée, la fente 51 que présente le tube externe ou fourreau 35 est droite, et elle s'etend donc suivant une génératrice de celui-ci, sur une portion de sa hauteur.

Dans la forme de réalisation représentée, le tube externe ou fourreau 35 a, en dessous du fond 28 de la cuve de démarrage 12, une extension limitée, en sorte qu'il ne plonge pas dans l'électrolyte 11 contenu dans le réservoir 10.

Mais, en variante, il peut aussi bien plonger dans cet électrolyte 11, en sorte que, dans un tel cas, c'est, indirectement, par son intermédiaire, que le tube de commande 33 suivant l'invention plonge alors dans un tel électrolyte 11.

Quoi qu'il en soit, le seuil de déversement 30 résulte, dans la forme de réalisation des figures 5 à 8, du recoupement l'une par l'autre des fentes 50, 51, ledit seuil de déversement étant formé par la protion de la fente oblique 50 qui se trouve en regard de la fente droite 51.

Suivant la position angulaire du tube de commande 33 dans le tube externe ou fourreau 35, la portion concernée de cette fente 50 varie entre ses extrémités, qui sont disposées, l'une à proximité de la portion supérieure du tube de commande 33, l'autre à proximite de la portion inférieure de celui-ci.

Il en résulte que, suivant la position angulaire du tube de commande 33, et donc sous le contrôle de la commande 31 associée, le seuil de déversement 30 varie en hauteur le long de la fente 51 du tube externe ou fourreau 35, ou autrement dit, que, comme précédemment ce seuil de déversement 30 est ainsi réglable en hauteur dans la cuve de démarrage 12, comme recherché.

La figure 9 se rapporte à une variante de réalisation, permettant, suivant un développement de l'invention, d'améliorer de manière avantageuse les résultats obtenus en fin de démarrage, notamment pour les gros moteurs nécessitant une tension élevée.

Suivant cette variante de réalisation, en partie haute de la cuve de démarrage 12, les électrodes 13, qui, comme précédemment sont portées par le couvercle 27 de celle-ci en étant isolées de ce couvercle 27, ledit couvercle 27 étant par exemple à cet effet en matière isolante, sont surmontées par une tôle 55, qui est portée par la cuve de démarrage 12, et avec laquelle, en l'absence d'électrolyte, elles sont dépourvues de toute liaison électrique.

Par exemple, et tel que représenté, cette tôle 55 se loge sur des ergots 56 prévus à cet effet en saillie sur la paroi interne de la cuve de démarrage 12, et elle présente des ouvertures 57 propres à un passage avec jeu, des tiges 58 par lesquelles les électrodes 13 sont suspendues au couvercle 27.

A la mise en place du couvercle 27, avec les électrodes 13 et la tôle 55, celle-ci se positionne sur les ergots 56, et, dès lors retenue et portée par la cuve de démarrage 12, elle est à distance des électrodes 13.

Elle n'intervient donc qu'à la fin du démarrage, lorsque, atteinte par l'électrolyte, et noyée par celui-ci, elle se trouve reliée électriquement aux électrodes 13 par cet électrolyte; elle forme alors un flasque de court-circuit, renforçant ainsi l'action d'anneau de court-circuit déjà assumée par la cuve de démarrage 12 elle-même.

La résistance résiduelle dans le circuit d'excitation du moteur concerné s'en trouve avantageusement abaissée.

Bien entendu, la présente invention ne se limite pas aux formes de réalisation décrites et représentées, mais englobe toute variante d'exécution et/ou de combinaison de celles-ci.

En particulier, si, dans ce qui précède, il a été supposé par simplicité que la commande à la disposition de l'usager pour le réglage en hauteur du seuil de déversement mis en oeuvre était manuelle, il va de soi qu'une telle commande peut, si désiré, être automatisée, notamment pour un asservissement éventuel en fonction par exemple d'un changement de constantes de démarrage; une telle commande peut dans ce cas être par exemple assurée par un vérin, un micromotoré-ducteur, ou une transmission à câble et gaine.

## Revendications

1. Rhéostat liquide à niveau variable pour le démarrage de moteur électrique, du genre comportant un réservoir (10), qui contient de l'électrolyte (11), une cuve du démarrage (12), qui est disposée au-dessus dudit réservoir (10), et dans la partie supérieure de laquelle sont disposées des électrodes (13), des bornes de connexion (22) propres à une liaison desdites électrodes au circuit d'excitation du moteur à mettre en route, une canalisation d'alimentation (14) établie entre ledit réservoir (10) et ladite cuve de démarrage (12) pour introduction d'électrolyte (11) dans celle-ci, et un seuil de déversement (30) qui, disposé dans ladite cuve de démarrage (12), est propre à limiter au moins temporairement le niveau d'électrolyte (11) dans celle-ci caractérisé en ce que le seul de déversement est monté réglable en hauteur dans la cuve de démarrage (12), sous le contrôle d'une commande (31) à la disposition de l'usager, le seuil de déversement (30) est formé par au moins une ouverture (32), dite ci-après ouverture de déversement, pratiquée latéralement dans au moins un tube (33) fermé transversalement vers le haut, au-dessus de ladite ouverture de déversement, dans la cuve de démarrage (12), et, directement ou indirectement, ledit tube (33), dit ci-après tube de commande, plonge dans l'électrolyte (11) contenu dans le réservoir (10), en sorte qu'il est capable de siphonnement.

2. Rhéostat liquide suivant la revendication 1, caractérisé en ce que le tube de commande (33) comporte une pluralité d'ouvertures de déversement (32), de relativement grande section de passage, réparties circulairement, par exemple à un même niveau.

3. Rhéostat liquide suivant l'une quelconque des revendications 1, 2, caractérisé en ce que, au-dessus du seuil de déversement (30), le tube de commande (33) présente au moins une ouverture de moindre section de passage (44), dite ci-après ouverture de casse-vide.

4. Rhéostat liquide suivant les revendications 1 à 3, prises conjointement, caractérisé en ce que plusieurs ouvertures de casse-vide (44) sont prévues, en alternance avec les ouvertures de déversement (32).

5. Rhéostat liquide suivant l'une quelconque des revendications 1 à 4, caractérisé en ce que le tube de commande (33) traverse le fond (28) de la cuve de démarrage (12) à la faveur d'un fourreau (35), qui est solidaire dudit fond (28), et dans lequel il est monté coulissant axialement, à étanchéité, sous le contrôle de la commande (31) à la disposition de l'usager.

6. Rhéostat liquide suivant la revendication 5, caractérisé en ce que, sensiblement à mi-hauteur, le tube de commande (33) présente latéralement au moins une ouverture de déversement (45), qui est normalement masquée par le fourreau (35) qu'il traverse, et qui se trouve démasquée lorsque le tube de commande (33) est en position haute, en débouchant alors dans la cuve de démarrage (12).

7. Rhéostat liquide suivant la revendication 1, caractérisé en ce que le seuil de déversement (30) est formé par la conjonction de deux ouvertures en forme de fente affectant chacune respectivement deux tubes coaxiaux (33, 35), qui sont emboîtés l'un dans l'autre, et dont un au moins est monté rotatif autour de l'axe de l'ensemble sous le contrôle de la commande (31) à la disposition de l'usager, la fente (50, 51) de l'un au moins desdits tubes (33, 35) étant globalement oblique vis-à-vis dudit axe.

8. Rhéostat liquide suivant la revendication 7, caractérisé en ce que le tube interne (33) est calé sur la commande (31) à la disposition de l'usager et présente une fente oblique (50), tandis que le tube externe (35) est fixe et présente une fente droite (51), et en ce que ledit tube externe (35) débouche à sa base dans le réservoir (10).

9. Rhéostat liquide suivant la revendication 8, caractérisé en ce que le tube interne (33) est fermé vers le haut par une paroi transversale, dans la cuve de demarrage, et le tube externe (35) plonge dans l'électrolyte (11) contenu dans le réservoir (10).

10. Rhéostat liquide suivant la revendication 1, caractérisé en ce qu'il est prévu au moins un trou de gavage (49) en-dessous du seuil de déversement (30) dans le tube concerné.

11. Rhéostat liquide suivant les revendications 6 et 10, prises conjointement, caractérisé en ce que le trou de gavage (49) est disposé entre les ouvertures de déversement (32) et les ouvertures de déversement (45).

12. Rhéostat liquide suivant l'une quelconque des revendications 1 à 11, caractérisé en ce que, en partie haute de la cuve de démarrage (12), les électrodes (13) sont surmontées par une tôle (55), qui est portée par ladite cuve de démarrage (12), et avec laquelle, en l'absence d'électrolyte (11), elles sont dépourvues de liaison électrique.

## Patentansprüche

1. Flüssigkeits-Regelwiderstand mit variablem Flüssigkeitsniveau zum Anlassen eines Elektromotors mit einem Behälter (10), der den Elektrolyten (11) enthält, einer Anlasserwanne (12), die oberhalb des Behälters (10) angeordnet ist und in deren oberem Teil Elektroden (13) angeordnet sind, mit Anschlußklemmen (22) zur Verbindung der Elektroden mit dem Erregerkreis des in Gang zu setzenden Motors, mit einer zwischen dem Behälter (10) und der Anlasserwanne (12) ausgebildete Speiseleitung (14) zum Einleiten des Elektrolyten (11) in die Anlasserwanne, und mit einer in der Anlasserwanne (12) angeordneten Überlaufschwelle, die geeignet ist, das Niveau des Elektrolyten (11) in der Anlasserwanne mindestens zeitweise zu begrezen, dadurch gekennzeichnet, daß die Überlaufschwelle in der Anlasserwanne (12) höhenverstellbar unter der Einwirkung einer nach Belieben des Benutzers verstellbaren Steuerung (31) gehalten ist, wobei die Überlaufschwelle (30) von mindestens einer Öffnung (32), hiernach Überlauföffnung genannt, gebildet wird, die seitlich in mindestens einem Rohr (33) ausgebildet ist, das nach oben hin oberhalb der Überlauföffnung in Querrichtung verschlossen ist und daß das hiernach Steuerungsrohr genannte Rohr (33) direkt oder indirekt in den im Behälter (10) enthalten en Elektrolyten (11) eintaucht, so daß es als Siphon wirken kann.

2. Flüssigkeits-Regelwiderstand nach Anspruch 1, dadurch gekennzeichnet, daß das Steuerungsrohr (33) eine Mehrzahl von Überlauföffnungen (32) von verhältnismäßig großem Durchlaßquerschnitt aufweist, die im Kreis, beispielsweise auf ein und demselben Niveau verteilt sind.

3. Flüssigkeits-Regelwiderstand nach einem der Ansprüche 1, 2, dadurch gekennzeichnet, daß das Steuerungsrohr (33) oberhalb der Überlaufschwelle (30) mindestes eine Öffnung von geringerem Durchlaßquerschnitt (44), hiernach als Vakuumbrecheröffnung bezeichnet, aufweist.

4. Flüssigkeits-Regelwiderstand nach den Ansprüche 1 bis 3, in Kombination, dadurch gekennzeichnet, daß mehrere Vakuumbrecher-Öffnungen (44) abwechselnd mit den Überlauföffnungen (32) vorgesehen sind.

5. Flüssigkeits-Regelwiderstand nach einem der Ansprüche 1 bis 4, dadurch gekennzeichnet, daß das Steuerungsrohr (33) de Boden (28) der Anlasserwanne (12) mit Hilfe einer Hülse (35) durchsetzt, die mit dem Boden (28) einstückig verbunden ist und in der das Steuerungsrohr abgedichtet und unter der Einwirkung der nach Belieben des Benutzers betätigbaren Steuerung (31) axial verschiebbar gehalten ist.

6. Flüssigkeits-Regelwiderstand nach Anspruch 5, dadurch gekennzeichnet, daß das Steuerungsrohr (33) im wesentlichen in halber Höhe seitlich mindestens eine Überlauföffnung (45) aufweist, die normalerweise durch die Hülse (35) verdeckt ist, welche das Steuerungsrohr (33) durchsetzt, und welche freigelegt wird, wenn sich das Steuerungsrohr (33) in einer oberen Stellung befindet, und dann in die Anlasserwanne (12) mündet.

7. Flüssigkeits-Regelwiderstand nach Anspruch 1, dadurch gekennzeichnet, daß die Überlaufschwelle (30) gebildet ist durch die Konjunktion von zwei schlitzförmige Öffnungen, die jeweils in zwei ineinander eingesetzten koaxiale Rohren (33, 35) ausgebildet sind und von denen mindestens ein Rohr um die Achse der Gesamtanordnung unter der Einwirkung der dem Benutzer zur Verfügung stehenden Steuerung (31) drehbar gehalten ist, wobei der Schlitz (50, 51) mindestes des einen der Rohre (33, 35) im ganzen schräg zur genannten Achse verläuft.

8. Flüssigkeits-Regelwiderstand nach Anspruch 7, dadurch gekennzeichnet, daß das innere Rohr (33) auf die der Einwirkung des Benutzers unterworfene Steuerung (31) aufgekeilt ist und einen schrägen Schlitz (50) aufweist, während das äußere Rohr (35) feststeht und einen geraden Schlitz (51) aufweist und das äußere Rohr (35) an seiner Basis in den Behälter (10) mündet.

9. Flüssigkeits-Regelwiderstand nach Anspruch 8, dadurch gekennzeichnet, daß das innere Rohr (33) in der Anlasserwanne nach oben durch eine Querwand verschlossen ist und daß das äußere Rohr (35) in den im Behälter (10) enthalten en Elektrolyten eintaucht.

10. Flüssigkeits-Regelwiderstand nach Anspruch 1, dadurch gekennzeichnet, daß mindestens ein Speisungsloch (49) unterhalb der Überlaufschwelle (30) im betreffenden Rohr vorgesehen ist.

11. Flüssigkeits-Regelwiderstand nach den Ansprüchen 6 und 10 in Kombination, dadurch gekennzeichnet, daß das Speisungsloch (49) zwische den Überlauföffnungen (32) und den Überlauföffnungen (45) angeordnet ist.

12. Flüssigkeits-Regelwiderstand nach einem der Ansprüche 1 bis 11, dadurch gekennzeichnet, daß im oberen Teil der Anlasserwanne (12) über den Elektroden (13) ein Blech (55) angeordnet ist, das von der Anlasserwanne (12) getragen ist und mit dem die Elektroden in Abwesenheit von Elektrolyt (11) nicht elektrisch verbunden sind.

## Claims

1. A variable-level liquid rheostat for starting an electric motor, of the kind comprising a reservoir (10) Which contains electrolyte (11), a starting tank (12) which is disposed above said reservoir (10) and in the upper portion of which are disposed electrodes (13), connecting terminals (22) for connecting said electrodes to the excitation circuit of the motor to be started, a feed conduit (14) between said reservoir (10) and said starting tank (12) for the introduction of electrolyte (11) into the latter, and an overflow threshold means (30) which, disposed in said starting tank (12), is capable of at least temporarily limiting the level of electrolyte (11) therein, characterised in that the overflow threshold means is mounted adjustably in respect of height in the starting tank (12), under the control of a control means (31) at the disposal of the user, the overflow threshold means (30) is formed by at least one opening (32), referred to hereinafter as the overflow opening, which is provided laterally in at least one tube (33) which is closed transversely upwardly above said overflow opening, in the starting tank (12), and, directly or indirectly, said tube (33), referred to hereinafter as the control tube, dips into the electrolyte (11) contained in the reservoir (10) in such a way that it is capable of siphoning.

2. A liquid rheostat according to claim 1 characterised in that the control tube (33) comprises a plurality of overflow openings (32) of relatively large flow section which are distributed in a circular array, for example at the same level.

3. A liquid rheostat according to either one of claims 1 and 2 characterised in that above the overflow threshold means (30), the control tube (33) has at least one opening (44) of smaller flow section, referred to hereinafter as the vacuum-breaking opening.

4. A liquid rheostat according to claims 1 to 3 in combination characterised in that there are provided a plurality of vacuum-breaking openings (44) in alternating relationship with the overflow openings (32).

5. A liquid rheostat according to any one of claims 1 to 4 characterised in that the control tube (33) passes through the bottom (28) of the starting tank (12) by means of a sleeve (35) which is fixed with respect to said bottom (28) and in which it is sealingly and axially slidably mounted under the control of the control means (31) at the disposal of the user.

6. A liquid rheostat according to claim 5 characterised in that substantially at its mid-height location the control tube (33) is provided laterally with at least one overflow opening (45) which is normally masked by the sleeve (35) through which it passes, and which is unmasked when the control tube (33) is in a raised position, thus opening into the starting tank (12).

7. A liquid rheostat according to claim 1 characterised in that the overflow threshold means (30) is formed by the conjunction of two slot-shaped openings each involving a respective one of two coaxial tubes (33, 35) which are engaged one within the other and at least one of which is mounted rotatably about the axis of the assembly under the control of the control means (31) at the disposal of the user, the slot (50, 51) in one at least of said tubes (33, 35) being generally inclined with respect to said axis.

8. A liquid rheostat according to claim 7 characterised in that the inner tube (33) is fixed on the control means (31) at the disposal of the user and has an inclined slot (50) while the outer tube (35) is fixed and has a straight slot (51), and that said outer tube (35) opens at its base into the reservoir (10).

9. A liquid rheostat according to claim 8 characterised in that the inner tube (33) is closed upwardly by a transverse wall, in the starting tank, and the outer tube (35) dips into the electrolyte (11) contained in the reservoir (10).

10. A liquid rheostat according to claim 1 characterised in that there is provided at least one filling hole (49), below the overflow threshold means (30), in the tube in question.

11. A liquid rheostat according to claims 6 and 10 in combination characterised in that the filling hole (49) is disposed between the overflow openings (32) and the overflow openings (45).

12. A liquid rheostat according to any one of claims 1 to 11 characterised in that in the upper part of the starting tank (12), disposed above the electrodes (13) is a metal plate (55) which is carried by said starting tank (12), said electrodes being without an electrical connection to said metal plate, in the absence of electrolyte (11).

FIG.1

FIG.2  FIG.3A  FIG.3B  FIG.4

FIG.5

FIG.6

FIG.7

FIG.8

FIG.9